# EUROPÄISCHE PATENTSCHRIFT

(11) **EP 0 515 422 B1**
(45) Veröffentlichungstag und Bekanntmachung des Hinweises auf die Patenterteilung: **31.08.1994**
(21) Anmeldenummer: 91903373.8
(22) Anmeldetag: 06.02.1991
(51) Int. Cl.: G11B 7/135

(54) **OPTISCHE ABTASTVORRICHTUNG**
OPTICAL SCANNING DEVICE
DISPOSITIF DE BALAYAGE OPTIQUE

(30) Priorität: 16.02.1990 DE 4004858
(43) Veröffentlichungstag der Anmeldung: 02.12.1992
(73) Patentinhaber: Deutsche Thomson-Brandt GmbH, 78003 Villingen-Schwenningen (DE)
(72) Erfinder: BÜCHLER, Christian, D-7730 VS-Marbach (DE); MORIMOTO, Yasuaki, Chiba-ken (JP)
(74) Vertreter: Einsel, Robert, Dipl.-Ing.
(86) Internationale Anmeldenummer: EP9100226
(87) Internationale Veröffentlichungsnummer: WO9112609

(56) Entgegenhaltungen:
- EP-A- 0 107 461
- EP-A- 0 316 866
- GB-A- 2 026 211
- PATENT ABSTRACTS OF JAPAN, vol. 7, no. 266 (P-239)(1411), 26 November 1983

## Beschreibung

Die Erfindung betrifft eine optische Abtastvorrichtung mit einer Objektivlinse für ein Aufzeichnungs- und/oder Wiedergabegerät, bei dem ein Lichtstrahl nach dem Einstrahlverfahren auf einen Aufzeichnungsträger fokussiert und vom Aufzeichnungsträger auf einen Photodetektor reflektiert wird, bei dem der Lichtstrahl mittels eines Spurregelkreises, der aus einem Grobantrieb und einem mit dem Grobantrieb mechanisch verbundenen Feinantrieb aufgebaut ist, auf den Datenspuren des Aufzeichnungsträgers geführt wird, bei dem die Objektivlinse mittels des Feinantriebs in einer Richtung bewegbar ist, die einen vorgebbaren Winkel α zur Normalen der Spurrichtung einschließt, bei dem ein astigmatisch wirkendes Element im Strahlengang vorgesehen ist und bei dem der vom Aufzeichnungsträger reflektierte Lichtstrahl auf einen Photodetektor aus mehreren Photodioden gelenkt wird.

Der von einer Laserdiode ausgesendete Lichtstrahl wird mittels einer Objektivlinse auf den Aufzeichnungsträger, beispielsweise eine Compact-Disc, fokussiert und von der Platte auf einen Vierquadrantenphotodetektor aus vier Photodioden A, B, C und D reflektiert. Weil im Strahlengang ein astigmatisch wirkendes Element, z.B. eine Zylinderlinse, liegt, wird der Lichtstrahl L bei genauer Fokussierung auf dem großen Quadrat, das aus den vier Photodioden A, B, C und D gebildet wird, kreisförmig abgebildet, während er bei Defokussierung Ellipsenform annimmt.

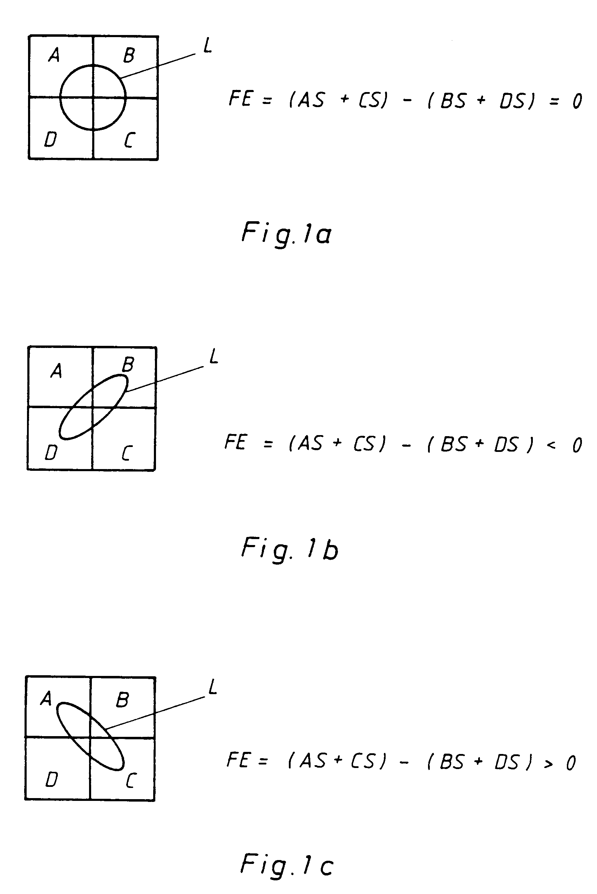

Figur 1a zeigt den Fall der genauen Fokussierung. Weil der vom Laserstrahl L auf dem großen Quadrat gebildete Lichtfleck Kreisform hat, ergibt sich das Fokusfehlersignal zu FE = (AS + CS) - (BS + DS) = 0. Am Wert null des Fokusfehlersignals FE erkennt der Fokusregelkreis, daß genau fokussiert ist.

In Figur 1b ist nun der eine Fall der Defokussierung, daß die Platte zu weit von der Objektivlinse entfernt ist, dargestellt. Das Fokusfehlersignal FE ist negativ: FE = (AS + CS) - (BS + DS) < 0. Am negativen Wert des Fokusfehlersignals FE erkennt der Fokusregelkreis, daß der Abstand zwischen der Platte und der Objektivlinse zu groß ist. Deshalb wird die Objektivlinse vom Stellglied des Fokusregelkreises so weit auf die Platte zubewegt, bis das Fokusfehlersignal FE zu null wird.

Den anderen Fall der Defokussierung, daß die Objektivlinse zu nahe an der CD-Platte liegt, ist in Figur 1c gezeigt. Das Fokusfehlersignal FE hat einen positiven Wert: FE = (AS + CS) - (BS + DS) > 0. Am positiven Wert des Fokusfehlersignals FE erkennt der Fokusregelkreis, daß die Objektivlinse zu nahe an der Platte liegt. Die Objektivlinse wird daher vom Stellglied so weit von der Platte wegbewegt, bis das Fokusfehlersignal FE zu null wird.

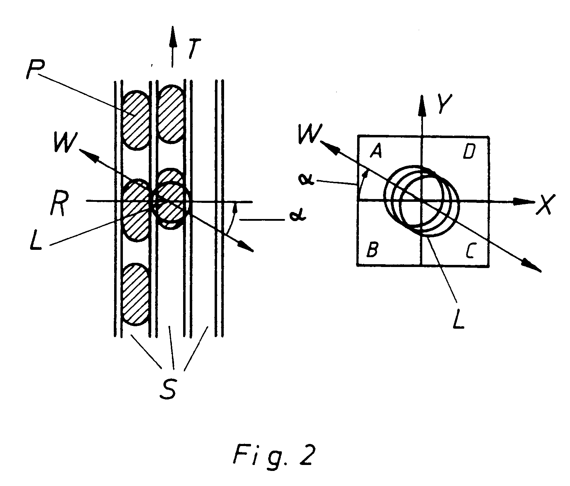

In Figur 2 sind drei Datenspuren S der Platte gezeigt, die mit Pits P beschrieben ist. Die Drehrichtung der Platte ist durch den mit T bezeichneten Pfeil angedeutet.

Weil die Objektivlinse vom Feinantrieb in einer Richtung bewegt wird, die einen Winkel α zur radialen Richtung einschließt, wandert der Lichtstrahl L auf der Platte ebenfalls unter diesem Winkel α. Die eine Achse des Vierquadrantenphotodetektors, die im weiteren Verlauf als y-Achse bezeichnet wird, verläuft in tangentialer Richtung bezüglich der Datenspuren. Die andere senkrecht zur y-Achse und parallel zur radialen Richtung verlaufende Achse des Vierquadrantenphotodetektors wird im weiteren Verlauf als x-Achse bezeichnet.

Wenn nun der Feinantrieb die Objektivlinse in der angegebenen Richtung W , die zur radialen Richtung den Winkel α einschließt, bewegt, damit der Lichtstrahl der Datenspur folgt, wandert der Lichtfleck L auf dem Vierquadrantenphotodetektor auf einer Geraden W, die mit der x-Achse ebenfalls einen Winkel α einschließt.

Durch die Bewegung der Objektivlinse in der angegebenen Richtung werden aber Abbildungsfehler des Lichtstrahls auf dem Vierquadrantenphotodetektor verursacht, die das Fokusfehlersignal FE verfälschen. Deshalb kann der Lichtstrahl nicht mehr genau auf den Aufzeichnungsträger, die Platte, fokussiert werden.

Es ist daher Aufgabe der Erfindung, eine Fehlfokussierung verursacht durch Abbildungsfehler weitgehend zu vermeiden.

Die Erfindung löst diese Aufgabe dadurch, daß eine bevorzugte Achse des im Strahlengang liegenden astigmatisch wirkenden Elementes ebenfalls den Winkel α zur Normalen der Spurrichtung einschließt.

Es zeigen
Figur 3 ein ersten Ausführungsbeispiel
Figur 4 ein zweites Ausführungsbeispiel

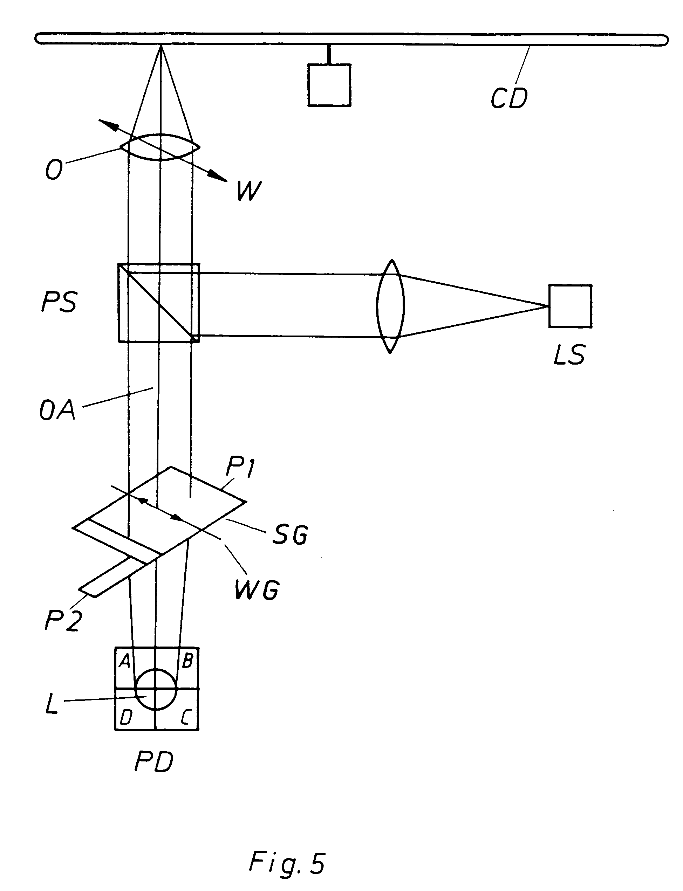

Figur 5 ein drittes Ausführungsbeispiel der Erfindung.

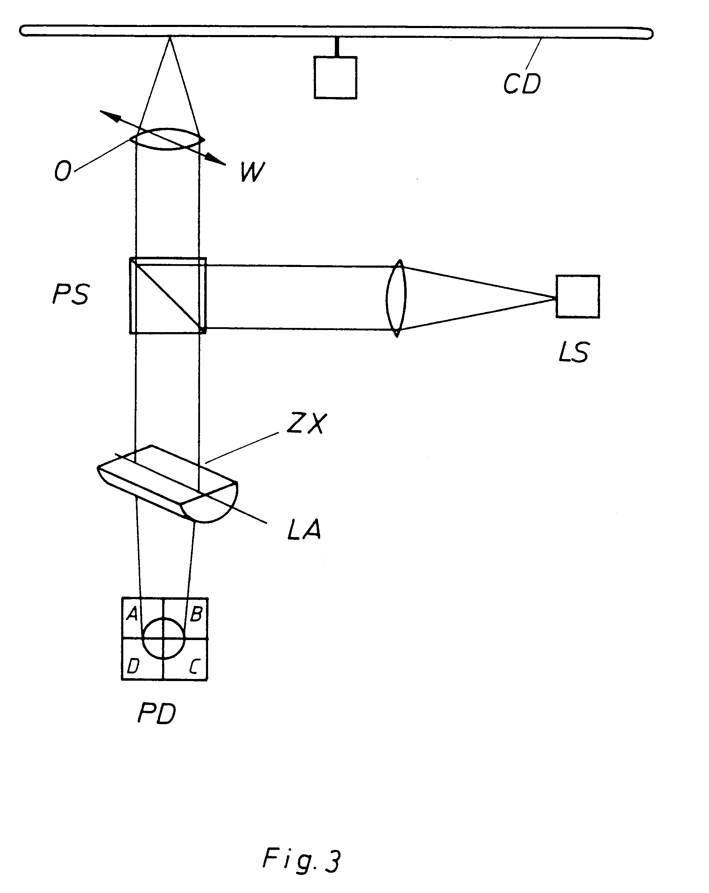

Es wird nun das in Figur 3 abgebildete erste Ausführungsbeispiel beschrieben und erläutert.

Beim ersten Ausführungsbeispiel der Erfindung ist eine konvexe Zylinderlinse ZX als astigmatisch wirkendes Element vorgesehen.

Der von eine Laserdiode LS ausgesendete Lichtstrahl kann z.B. mittels eines Prismenstrahlteilers PS auf die Platte CD gelenkt werden. Von dort wird er den Prismenstrahlteiler PS durchstrahlend auf einen Vierquadrantenphotodetektor PD reflektiert.

Die konvexe Zylinderlinse ZX ist nun zwischen der Objektivlinse 0 und dem Vierquadrantenphotodetektor PD so im Strahlengang angeordnet, daß ihre Längsachse LA parallel zur Bewegungsrichtung W der Objektivlinse 0 verläuft. Die konvexe Seite der Zylinderlinse ZX kann zur Platte CD oder zum Vierquadrantenphotodetektor PD zeigen. Zwar treten auch hier Abbildungsfehler auf, die jedoch infolge ihrer Symmetrie bezüglich der Richtung W das Fokusfehlersignal FE nicht nennenswert verfälschen.

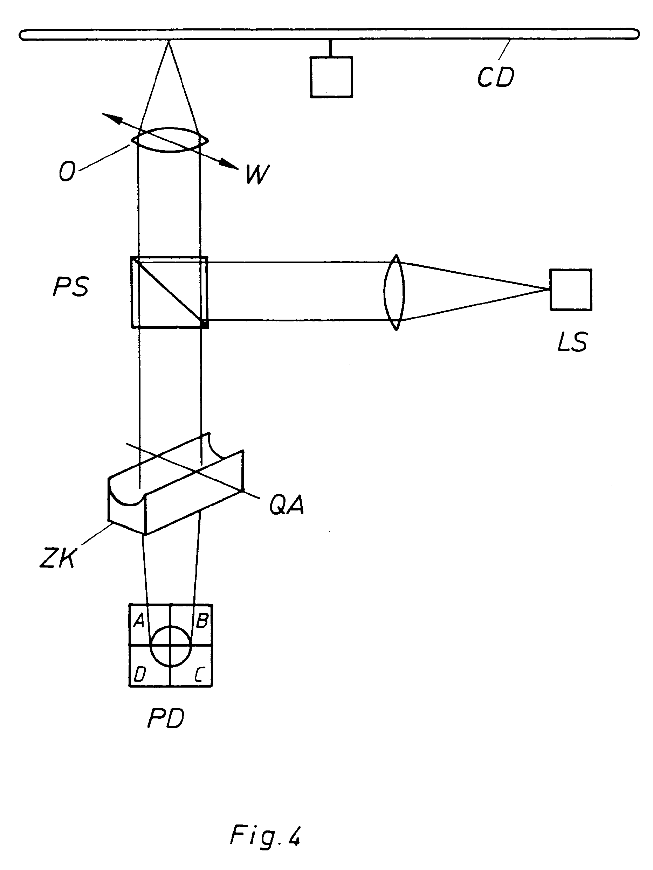

Bei dem in Figur 4 abgebildeten zweiten Ausführungsbeispiel liegt zwischen der Objektivlinse O und dem Vierquadrantenphotodetektor PD eine konkave Zylinderlinse ZK als astigmatisch wirkendes Element im Strahlengang. Damit die eingangs erwähnten Abbildungsfehler sich nicht störend auf die Fokussierung auswirken, ist die konkave Zylinderlinse ZK so im Strahlengang angeordnet, daß ihre Querachse QA parallel zur Bewegungsrichtung W der Objektivlinse verläuft. Es spielt keine Rolle, ob die konkave Seite der Zylinderlinse ZK der Platte CD oder dem Vierquadrantenphotodetektor PD zugewandt ist.

Ein drittes Ausführungsbeispiel der Erfindung ist mit zwei rechtwinklig zueinander angeordneten Platten P1 und P2 aus lichtdurchlässigem Material ausgerüstet, um Astigmatismus zu erzeugen.

Die eine Platte P1 schneidet die optische Achse OA unter einem Winkel von + 45°, so daß die zu ihr senkrecht stehende andere Platte P2 die optische Achse OA unter einem Winkel von - 45° schneidet. Die beiden Platten P1 und P2 sind ferner so justiert, daß die Schnittgerade SG, wo sich die beiden Platten P1 und P2 schneiden, senkrecht zur Bewegungsrichtung W der Objektivlinse O verläuft. Die Seitenkanten der beiden Platten sind deshalb parallel zur Bewegungsrichtung W der Objektivlinse O, wenn rechteckförmige Platten vorgesehen sind. Wenn die Objektivlinse nun vom Feinantrieb in der Richtung W bewegt wird, läuft deshalb der Lichtstrahl auf den beiden Platte P1 und P2 entlang einer Geraden WG, welche die Schnittgerade SG senkrecht schneidet sowie parallel zur Bewegungsrichtung W und zu den Seitenkanten verläuft.

Der Winkel, den die beiden Platten P1 und P2 einschließen, kann auch größer oder kleiner als 90° sein; um eine deutlich meßbare astigmatische Wirkung zu erzielen, muß er jedoch einen bestimmten Betrag über 0° und einen bestimmten Betrag unter 180° liegen. Die beiden Platten P1 und P2 sind im Strahlengang so angeordnet, daß die Ebene, die diesen Winkel halbiert, senkrecht zur optischen Achse OA liegt.

Die beiden Platten P1 und P2 können z.B. als zwei getrennte Teile im Strahlengang liegen, sie können aber auch ein einziges Teil bildend miteinander verbunden sein. So kann beispielsweise die Platte P2 mit einer Stirnseite auf die Platte P1 geklebt sein.

Die Erfindung ist für solche optische Abtastvorrichtungen geeignet, die zum Lesen der Daten eines Aufzeichnungsträgers einen Lichtstrahl nach dem Astigmatismusverfahren mittels einer Objektivlinse auf den Aufzeichnungsträger fokussieren, die sich in einer Richtung bewegen läßt, die einen vorgebbaren Winkel α zur Normalen der Spurrichtung einschließt.

Als Beispiele seien CD-Spieler, Videoplattenspieler, DRAW-Disc-Spieler und magneto-optische Geräte genannt.

## Patentansprüche

1. Optische Abtastvorrichtung mit einer Objektivlinse (O) für ein Aufzeichnungs- und/oder Wiedergabegerät, bei dem ein Lichtstrahl (L) nach dem Einstrahlverfahren auf einen Aufzeichnungsträger (CD) fokussiert und vom Aufzeichnungsträger (CD) auf einen Photodetektor (PD) reflektiert wird, bei dem der Lichtstrahl (L) mittels eines Spurregelkreises, der aus einem Grobantrieb und einem mit dem Grobantrieb mechanisch verbundenen Feinantrieb aufgebaut ist, auf den Datenspuren (S) des Aufzeichnungsträgers (CD) geführt wird, bei dem die Objektivlinse (O) mittels des Feinantriebs in einer Richtung (W) bewegbar ist, die einen vorgebbaren Winkel (α) zur Normalen (R) der Spurrichtung einschließt, bei dem ein astigmatisch wirkendes Element (ZX, ZK, P1 und P2) im Strahlengang vorgesehen ist und bei dem der vom Aufzeichnungsträger (CD) reflektierte Lichtstrahl (PD) auf einen Photodetektor aus mehreren Photodioden (A, B, C, D) gelenkt wird, **dadurch gekennzeichnet**, daß eine bevorzugte Achse (AL, AQ, WG) des im Strahlengang liegenden astigmatisch wirkenden Elementes (ZX, ZK, P1 und P2) ebenfalls den Winkel (α) zur Normalen (R) der Spurrichtung einschließt.

2. Optische Abtastvorrichtung nach Anspruch 1, **dadurch gekennzeichnet**, daß als astigmatisch wirkendes Element eine konvexe Zylinderlinse (ZX) vorgesehen ist, deren Längsachse (LA) den Winkel (α) zur Normalen (R) der Spurrichtung einschließt.

3. Optische Abtastvorrichtung nach Anspruch 1, **dadurch gekennzeichnet**, daß als astigmatisch wirkendes Element eine konkave Zylinderlinse (ZK) vorgesehen ist, deren Querachse (QA) den Winkel (α) zur Normalen (R) der Spurrichtung einschließt.

4. Optische Abtastvorrichtung nach Anspruch 1, **dadurch gekennzeichnet**, daß als astigmatisch wirkendes Element zwei lichtdurchlässige Platten (P1, P2), die einen Winkel γ < 180° einschließen, derart symmetrisch im Strahlengang liegen, daß die den Winkel γ halbierende Ebene senkrecht zur optischen Achse (OA) liegt und daß die Schnittgerade (SG), wo sich die beiden Platten (P1, P2) schneiden, senkrecht zur Bewegungsrichtung (W) der Objektivlinse (O) verläuft.

5. Optische Abtastvorrichtung nach Anspruch 4, **dadurch gekennzeichnet**, daß die Platten (P1, P2) einen rechten Winkel einschließen, so daß die eine Platte (P1) die optische Achse (OA) unter einem Winkel von + 45° schneidet, während die andere senkrecht zu ihr stehende Platte (P2) die optische Achse (OA) unter einem Winkel von - 45° schneidet.

6. Optische Abtastvorrichtung nach Anspruch 4 oder 5, **dadurch gekennzeichnet**, daß die beiden Platten (P1, P2) als zwei getrennte Teile ausgeführt sind.

7. Optische Abtastvorrichtung nach Anspruch 4 oder 5, **dadurch gekennzeichnet**, daß die beiden Platten (P1, P2) ein Teil bildend miteinander verbunden sind.

8. Optische Abtastvorrichtung nach Anspruch 1, 2, 3, 4, 5, 6 oder 7 **dadurch gekennzeichnet**, daß der Winkel (α) zu 45° gewählt ist.

## Claims

1. An optical scanning device with an objective lens (O) for a recording and/or reproduction device, in which a light beam (L) is focussed onto a recording medium (CD) according to the single beam technique and is reflected from the recording medium (CD) onto a photodetector (PD), in which the light beam (L) is guided onto the data tracks (S) of the recording medium (CD) by means of a tracking control circuit, constructed from a coarse drive and a fine drive mechanically coupled with the coarse drive, in which the objective lens (O) can be moved by means of the fine drive in a direction (W) which makes a predetermined angle (α) with the normals (R) to the track direction, in which an astigmatically acting element (ZX, ZK, P1 and P2) is provided in the path of the beam, and in which the light beam (PD) reflected from the recording medium (CD) is directed onto a photodetector consisting of a plurality of photodiodes (A, B, C, D), characterised in that a preferred axis (AL, AQ, WG) of the astigmatically acting element (ZX, ZK, P1 and P2) lying in the path of the beam also makes the angle α with the normals (R) to the track direction.

2. An optical scanning device according to claim 1, characterised in that a convex cylindrical lens (ZX) is provided as the astigmatically acting element, the longitudinal axis (LA) of which makes the angle (α) with the normals (R) to the track direction.

3. An optical scanning device according to claim 1, characterised in that a concave cylindrical lens (ZK) is provided as the astigmatically acting element, the transverse axis (QA) of which makes the angle (α) with the normals (R) to the track direction.

4. An optical scanning device according to claim 1, characterised in that two transparent plate members (P1, P2), which make an angle γ < 180°, are provided as the astigmatically acting element and are arranged symmetrically in the path of the beam in such a way that the plane bisecting the angle γ lies perpendicular to the optical axis (OA) and that the line of intersection (SG), where the two plate members (P1, P2) intersect, extends perpendicular to the direction of movement (W) of the objective lens (O).

5. An optical scanning device according to claim 4, characterised in that the plate members (P1, P2) make a right angle so that one plate member (P1) intersects the optical axis (OA) at an angle of +45°, while the other plate member (P2), positioned perpendicular to the first, intersects the optical axis (OA) at an angle of -45°.

6. An optical scanning device according to claim 4 or 5, characterised in that the two plate members (P1, P2) are formed as two separate parts.

7. An optical scanning device according to claim 4 or 5, characterised in that the two plate members (P1, P2) are connected to each other forming one part.

8. An optical scanning device according to claim 1,2,3,4,5,6 or 7, characterised in that the angle (α) is selected as 45°.

## Revendications

1. Dispositif de balayage optique avec une lentille d'objectif (O) pour un appareil d'enregistrement et/ou de reproduction dans lequel un faisceau lumineux (L) est focalisé selon le procédé à un faisceau sur un support d'enregistrement (CD) et est réfléchi par le support d'enregistrement (CD) sur un détecteur photoélectrique (PD), dans lequel le faisceau lumineux (L) est guidé sur les pistes de données (S) du support d'enregistrement (CD) au moyen d'un circuit de réglage de piste qui est constitué par une commande grossière et une commande fine reliée mécaniquement à la commande grossière, dans lequel la lentille d'objectif (O) peut être déplacée au moyen de la commande fine dans un sens (W) qui inclut un angle (α), qui peut être prédéterminé, par rapport à la normale (R) du sens des pistes, dans lequel un élément à effet astigmatique (ZX, ZK, P1 et P2) est prévu dans la marche des rayons et dans lequel le faisceau lumineux (PD) réfléchi par le support d'enregistrement (CD) est guidé sur un détecteur photoélectrique composé de plusieurs photodiodes (A, B, C, D), **caractérisé en ce** qu'un axe préféré (AL, AQ, WG) de l'élément à effet astigmatique (ZX, ZK, P1 et P2) qui se trouve dans la marche des rayons inclut également l'angle (α) par rapport à la normale (R) du sens des pistes.

2. Dispositif de balayage optique selon la revendication 1, **caractérisé en ce** que comme élément à effet astigmatique une lentille cylindrique convexe (ZX) est prévue dont l'axe longitudinal (LA) inclut l'angle (α) par rapport à la normale (R) du sens des pistes.

3. Dispositif de balayage optique selon la revendication 1, **caractérisé en ce** que comme élément à effet astigmatique une lentille cylindrique concave (ZK) est prévue dont l'axe transversal (QA) inclut l'angle (α) par rapport à la normale (R) du sens des pistes.

4. Dispositif de balayage optique selon la revendication 1, **caractérisé en ce** que comme élément à effet astigmatique deux disques perméables à la lumière (P1, P2), qui incluent un angle γ < 180°, se situent de manière symétrique de telle manière que le plan, qui divise l'angle γ en deux, est perpendiculaire à l'axe optique (OA) et que la droite de coupe (SG), où les deux disques (P1, P2) se coupent, est perpendiculaire au sens de déplacement (W) de la lentille d'objectif (O).

5. Dispositif de balayage optique selon la revendication 4, **caractérisé en ce** que les disques (P1, P2) incluent un angle droit si bien que l'un des disques (P1) coupe l'axe optique (OA) en formant un angle de + 45°, tandis que l'autre disque (P2), qui est perpendiculaire à celui-ci, coupe l'axe optique (OA) en formant un angle de - 45°.

6. Dispositif de balayage optique selon la revendication 4 ou 5, **caractérisé en ce** que les deux disques (P1, P2) sont conçus comme deux parties séparées.

7. Dispositif de balayage optique selon la revendication 4 ou 5, **caractérisé en ce** que les deux disques (P1, P2) sont reliés l'un à l'autre en formant une partie.

8. Dispositif de balayage optique selon la revendication 1, 2, 3, 4, 5, 6 ou 7, **caractérisé en ce** que l'angle (α) est choisi de 45°.
